# EUROPÄISCHE PATENTSCHRIFT

(11) **EP 3 488 201 B1**
(45) Veröffentlichungstag und Bekanntmachung des Hinweises auf die Patenterteilung: **10.03.2021**
(21) Anmeldenummer: 17751022.9
(22) Anmeldetag: 12.07.2017
(51) Int. Cl.: G01F 23/38, G01F 23/46, G01F 23/62

(54) **PASSIVER MAGNETISCHER FÜLLSTANDSSENSOR**
PASSIVE MAGNETIC FILLING LEVEL SENSOR
CAPTEUR DE NIVEAU DE REMPLISSAGE MAGNÉTIQUE PASSIF

(30) Priorität: 22.07.2016 DE 102016213514
(43) Veröffentlichungstag der Anmeldung: 29.05.2019
(73) Patentinhaber: Vitesco Technologies GmbH, 30165 Hannover (DE)
(72) Erfinder: BENNER, Hans-Guenter, 65830 Kriftel (DE); KADLER, Matthias, 65428 Rüsselsheim (DE); BARZ, Torsten, 63454 Hanau-Mittelbuchen (DE)
(86) Internationale Anmeldenummer: PCT/EP2017/067479
(87) Internationale Veröffentlichungsnummer: WO 2018/015232

(56) Entgegenhaltungen:
- EP-A2- 2 230 486
- WO-A1-2015/185265
- CN-U- 203 148 528
- DE-A1- 4 309 442
- DE-A1- 19 819 047
- DE-A1-102005 047 542
- DE-A1-102006 054 811
- US-A1- 2015 338 264

## Beschreibung

### Technisches Gebiet

Die Erfindung betrifft einen Füllstandsgeber für die Bestimmung eines Füllstandes in einem Tank, mit einem Widerstandsnetzwerk, mit einem Kontaktelement und mit einem magnetischen Element, wobei das Kontaktelement beabstandet zu dem Widerstandsnetzwerk angeordnet ist und das magnetische Element relativ zum Widerstandsnetzwerk und dem Kontaktelement bewegbar ist, wobei das Kontaktelement einen Kontaktbereich aufweist, welcher durch das magnetische Element auslenkbar ist, wobei eine elektrisch leitfähige Verbindung zwischen dem Kontaktbereich und dem Widerstandsnetzwerk durch eine Auslenkung des Kontaktbereichs herstellbar ist.

### Stand der Technik

Füllstandsgeber zur Ermittlung des Füllstands in einem Kraftstofftank weisen ein Widerstandsnetzwerk auf, welches abhängig von dem tatsächlichen Füllstand ein Signal erzeugt, welches dem Füllstand im Kraftstofftank entspricht. Hierzu wird regelmäßig ein Schwimmer vorgesehen, der auf der Oberfläche des Kraftstoffs im Kraftstofftank schwimmt und mittels eines Gestänges und einem Schleifkontakt auf das Widerstandsnetzwerk einwirkt. Die Bewegung des Schwimmers infolge eines steigenden oder sinkenden Füllstandes wird über das Gestänge an den Schleifkontakt übertragen der infolge der Bewegung an dem Widerstandsnetzwerk vorbeigeführt wird. Abhängig von der Position des Schleifkontakts wird hierbei ein unterschiedliches Signal erzeugt. Durch eine Normierung des Signals und einer spezifischen Gestaltung des Widerstandsnetzwerks kann aus dem an dem Widerstandsnetzwerk erzeugten Signal direkt auf den Füllstand im Kraftstofftank geschlossen werden. Solche Füllstandsgeber sind in vielfältiger Weise im Stand der Technik bekannt.

Die Druckschrift DE 10 2005 047 542 A1 offenbart einen Füllstandssensor für einen Füllstandsgeber bestehend aus einem Substrat auf dem ein Widerstandsnetzwerk und eine dem Widerstandsnetzwerk zugeordnete Kontaktstruktur angeordnet ist, einem das Widerstandsnetzwerk und die Kontaktstruktur verschließenden Deckel und einem Permanentmagneten zum Betätigen der Kontaktstruktur, wobei die elektrische Verbindung der Kontaktstruktur mit dem Widerstandsnetzwerk ein elektrisches Signal für den Füllstand erzeugt.

Aus der Druckschrift EP 2 230 486 A2 ist ein Positionsgeber bekannt, bei dem ein Kontaktelement durch lokale Durchbiegung von einem Magneten mit einer Widerstandsbahn in Kontakt gebracht wird. Der Kontaktbereich ist dabei durch ein flächiges bandförmiges Element gebildet, welches durch die Magnetkraft des magnetischen Elementes partiell auslenkbar ist, wobei der Kontaktbereich streifenförmig ist.

Darüber hinaus sind Füllstandsgeber bekannt, die anstelle eines Schleifkontakts ein Kontaktelement aufweisen, welches eine Mehrzahl von fingerartigen Abschnitten aufweist, die durch eine Magnetkraft derart ausgelenkt werden können, dass ein elektrischer Kontakt zwischen dem fingerartigen Abschnitt und einem Widerstandsnetzwerk erzeugt wird. Durch das Erzeugen des elektrischen Kontakts wird ein Signal erzeugt. Abhängig von der Ausgestaltung des Widerstandsnetzwerks und des Kontaktelementes kann durch das erzeugte Signal direkt auf den Füllstand im Kraftstofftank geschlossen werden. Ein solcher Füllstandsgeber ist beispielsweise durch die DE 197 01 246 A1 bekannt.

Nachteilig an den Vorrichtungen im Stand der Technik ist insbesondere, dass der Schleifkontakt an dem Widerstandsnetzwerk eine mechanische Kontaktierung darstellt, die einem unvermeidbaren Verschleiß unterliegt. Außerdem sind der Schleifkontakt und das Widerstandsnetzwerk hierbei vollständig im Kraftstoff innerhalb des Kraftstofftanks angeordnet, wodurch es zu schädigenden Einwirkungen durch den Kraftstoff kommen kann. Die Erzeugung des elektrischen Kontakts durch ein Kontaktelement mit einer Mehrzahl von fingerartigen Abschnitten, die durch einen Magneten ausgelenkt werden können, ist nachteilig, da das Kontaktelement sehr empfindlich gegenüber mechanischen Störeinflüssen ist, was insbesondere die Montage und den Transport der Kontaktelemente erschwert.

Darstellung der Erfindung, Aufgabe, Lösung, Vorteile Daher ist es die Aufgabe der vorliegenden Erfindung einen Füllstandsgeber zu schaffen, welcher ein mechanisch widerstandsfähigeres Kontaktelement aufweist und gleichzeitig eine verschleißfreie Erzeugung eines von dem Füllstand im Kraftstofftank abhängigen und möglichst genauen Signals ermöglicht. Die Aufgabe hinsichtlich des Füllstandsgebers wird durch einen Füllstandsgeber mit den Merkmalen von Anspruch 1 gelöst. Ein Ausführungsbeispiel der Erfindung betrifft einen Füllstandsgeber für die Bestimmung eines Füllstandes in einem Tank, mit einem Widerstandsnetzwerk, mit einem Kontaktelement und mit einem magnetischen Element, wobei das Kontaktelement beabstandet zu dem Widerstandsnetzwerk angeordnet ist und das magnetische Element relativ zum Widerstandsnetzwerk und dem Kontaktelement bewegbar ist, wobei das Kontaktelement einen Kontaktbereich aufweist, welcher durch das magnetische Element auslenkbar ist, wobei eine elektrisch leitfähige Verbindung zwischen dem Kontaktbereich und dem Widerstandsnetzwerk durch eine Auslenkung des Kontaktbereichs herstellbar ist, wobei der Kontaktbereich durch ein flächiges bandförmiges Element gebildet ist, welches durch die Magnetkraft des magnetischen Elementes partiell auslenkbar ist, wobei der Kontaktbereich zumindest zwei benachbart zueinander angeordnete und zueinander beabstandete streifenförmige Abschnitte aufweist. Das Widerstandsnetzwerk weist eine Mehrzahl von Kontaktflächen auf, die benachbart zueinander angeordnet sind, wobei die Erzeugung eines elektrisch leitfähigen Kontakts zwischen dem Kontaktbereich und einer ersten Kontaktfläche ein Signal erzeugt, welches einen maximalen Füllstand im Tank wiederspiegelt, und die Erzeugung eines elektrisch leitfähigen Kontakts zwischen dem Kontaktbereich und einer zweiten Kontaktfläche ein Signal erzeugt, welches einen minimalen Füllstand im Tank wiederspiegelt.

Durch einen solchen Aufbau des Widerstandsnetzwerks und des Kontaktelementes kann die Erfassung des Füllstandes über das gesamte Spektrum von vollständig leer bis maximal gefüllt erfasst werden. Abhängig von dem Füllstand ändert sich die Position des Schwimmers, der über einen Hebelarm mit dem Magneten verbunden ist. Durch die Positionsveränderung des Schwimmers wird somit auch die Position des Magneten verändert, wodurch das Kontaktelement mit unterschiedlichen Kontaktflächen in elektrisch leitenden Kontakt gebracht wird. Dadurch lässt sich bei genauer Zuordnung der erzeugten Signale, hier insbesondere der spezifischen Widerstandswerte, zur Position des Magneten auch eine Aussage über den Füllstand treffen.

Das Kontaktelement ist vorteilhafterweise mit einem ersten elektrischen Potential verbunden. Das Widerstandsnetzwerk ist mit einem zweiten von dem ersten elektrischen Potential abweichenden elektrischen Potential verbunden. Durch einen Kontakt zwischen dem Kontaktelement und dem Widerstandsnetzwerk kann ein elektrischer Kreis geschlossen werden, wodurch ein Signal erzeugt wird. Das Widerstandsnetzwerk weist eine Mehrzahl von Kontaktflächen auf, die jeweils einen spezifischen ohmschen Widerstand aufweisen. Abhängig davon mit welcher Kontaktfläche das Kontaktelement in Kontakt gebracht wird, wird so ein Signal mit einem spezifischen elektrischen Widerstand erzeugt. Die Signale spezifischen Widerstands können dann einem Füllstand zugeordnet werden. Dies ist möglich, da der elektrische Kontakt zwischen dem Kontaktelement und dem Widerstandsnetzwerk durch den Magneten erzeugt wird, der mit einem Hebelarm und einem daran angebundenen Schwimmer verbunden ist, wodurch der Magnet in Abhängigkeit von der Position des Schwimmers bewegt wird.

Das Kontaktelement ist in einer vorteilhaften Ausführung elektrisch isoliert von dem Widerstandsnetzwerk benachbart zu diesem angeordnet. Das Widerstandsnetzwerk kann beispielsweise auf einem Trägersubstrat angeordnet sein. Das Kontaktelement weist zum Zwecke der Anbindung bevorzugt einen Anbindungsbereich auf. Dieser weist beispielsweise Öffnungen oder Aussparungen auf, die eine dauerhafte Anbindung an das Trägersubstrat und/oder das Widerstandsnetzwerk erlauben. Das Kontaktelement weist weiterhin einen Kontaktbereich auf, der flexibel ist und unabhängig von dem Anbindungsbereich aus der Ausgangslage des Kontaktelementes ausgelenkt werden kann. Der Kontaktbereich ist derart über dem Widerstandsnetzwerk angeordnet, dass durch ein Vorbeiführen des Magneten auf der dem Kontaktelement abgewandten Seite des Widerstandsnetzwerks eine Auslenkung des Kontaktelementes beziehungsweise des Kontaktbereichs des Kontaktelementes erfolgt, so dass ein physischer Kontakt zwischen dem Kontaktbereich und dem Widerstandsnetzwerk entsteht.

Der Kontaktbereich weist zumindest zwei Abschnitte auf, die beispielsweise parallel zueinander verlaufen und unabhängig voneinander ausgelenkt werden können. Die beiden Abschnitte können von einem gemeinsamen Magneten ausgelenkt werden, so dass praktisch eine Redundanz erzeugt ist. Es kann so beispielsweise bei der Zerstörung eines Abschnitts der jeweils andere Abschnitt weiterhin ein korrektes Signal erzeugen. Auch können die Signale, die infolge des Schließens eines elektrischen Kreises zwischen einem Abschnitt und dem Widerstandsnetzwerk erzeugt werden, miteinander abgeglichen werden, um die Richtigkeit der Signale zu verifizieren. Hierzu kann jedem der Abschnitte ein eigenes Widerstandsnetzwerk zu geordnet sein, um jeweils eigenständige Signale erzeugen zu können und einen Abgleich durchführen zu können.

Vorteilhafterweise ist das Kontaktelement hierbei ein flächiges Bandelement, welches im nicht ausgelenkten Zustand im Wesentlichen in einer Ebene ausgerichtet ist. Durch den Magneten wird das bandförmige Kontaktelement aus der Ausgangslage ausgelenkt und in Richtung des Widerstandsnetzwerks angezogen. Hierbei tritt eine partielle Verformung des Kontaktelementes beziehungsweise eines Abschnitts des Kontaktbereichs auf. Die Flexibilität der Abschnitte des Kontaktbereichs ist derart gestaltet, dass einerseits die Distanz zwischen den Abschnitten und dem Widerstandsnetzwerk durch die Auslenkung überbrückt werden kann, und dass andererseits nur ein definierter begrenzter Bereich des jeweiligen Abschnitts soweit ausgelenkt wird, dass ein elektrischer Kontakt mit einer der Kontaktflächen des Widerstandsnetzwerks erfolgt. In einer vorteilhaften Ausgestaltung können die Abschnitte des Kontaktbereichs auch derart ausgebildet sein, dass eine Mehrzahl von nebeneinander und direkt zueinander benachbarten Kontaktflächen gleichzeitig durch die Auslenkung kontaktiert wird.

Besonders vorteilhaft ist es, wenn die Abschnitte des Kontaktbereichs elektrisch leitfähig miteinander verbunden sind. Durch eine elektrisch leitfähige Verbindung der Abschnitte miteinander kann sichergestellt werden, dass beide Abschnitte mit dem gleichen elektrischen Potential verbunden sind. Bei dem Ausfall eines Abschnitts bleibt somit zumindest das Signal von dem jeweils anderen Abschnitt erhalten.

In einer alternativen Ausgestaltung ist es vorteilhaft, wenn die Abschnitte des Kontaktbereichs mit dem gleichen elektrischen Potential in elektrisch leitender Verbindung stehen. Dies ist vorteilhaft, um die Ausfallsicherheit zu gewährleisten. Da die Abschnitte am gleichen elektrischen Potential angebunden sind, erzeugen sie beim Kontakt mit dem Widerstandsnetzwerk auch jeweils die gleichen Signale. Es werden somit redundante Signale erzeugt, weswegen auch das Wegfallen eines einzelnen Signals von einem der Abschnitte folgenlos kompensiert werden kann.

Auch ist es zu bevorzugen, wenn die Abschnitte des Kontaktbereichs frei von Ausnehmungen und/oder Durchdringungen sind. Ein Kontaktbereich beziehungsweise einzelne definierte Abschnitte des Kontaktbereichs, die frei von Aussparungen und/oder Durchdringungen sind, sind besonders vorteilhaft, da die Herstellung besonders einfach ist. Außerdem weist der Kontaktbereich beziehungsweise die Abschnitte dadurch eine sehr hohe Robustheit während der Fertigung und des Transports auf. Auch muss bei der Montage kein hochgenaues Matching zwischen dem Kontaktbereich beziehungsweise den Abschnitten und dem Widerstandsnetzwerk durchgeführt werden, da die gesamte Fläche des Kontaktbereichs beziehungsweise der Abschnitte zur Erzeugung eines elektrischen Kontakts verwendet werden kann.

Weiterhin ist es zweckmäßig, wenn das Kontaktelement beziehungsweise die Abschnitte aus einem Kunststoff gebildet sind oder, wenn das Kontaktelement aus einem metallischen Werkstoff gebildet ist. Sofern das Kontaktelement aus einem Kunststoff gebildet ist, ist eine metallische Beschichtung auf der dem Widerstandsnetzwerk zugewandten Seite aufgebracht. Vorteilhafterweise können an einem Kontaktelement aus Kunststoff auch Elemente vorgesehen sein, die besonders leicht durch eine magnetische Kraft anziehbar sind.

Darüber hinaus ist es vorteilhaft, wenn die zueinander beabstandeten Abschnitte des Kontaktbereichs durch einen gemeinsamen Magneten auslenkbar sind. Dies ist vorteilhaft, da somit sichergestellt wird, dass abhängig von der jeweiligen Position des Magneten alle Abschnitte gleichmäßig angezogen werden. Dies hilft um die Erzeugung eines redundanten Signals sicherzustellen.

Weiterhin ist es vorteilhaft, wenn ein elektrisch leitfähiger Kontakt zwischen den Abschnitten des Kontaktbereichs und Kontaktflächen eines Widerstandsnetzwerks herstellbar ist. Dies ist erforderlich, um ein elektrisches Signal zu erzeugen, das eine Aussage über den Füllstand im Tank zulässt.

Auch ist es zweckmäßig, wenn jedem der Abschnitte des Kontaktbereichs ein eigenes Widerstandsnetzwerk zugeordnet ist, wobei ein elektrisch leitfähiger Kontakt zwischen einem Abschnitt und dem zugeordneten Widerstandsnetzwerk durch eine Auslenkung des jeweiligen Abschnitts herstellbar ist. Dies ist vorteilhaft, um eine erhöhte Sicherheit gegen einen Ausfall des Füllstandsgebers zu erzeugen. Die beiden unabhängigen Widerstandsnetzwerke können mit dem gleichen elektrischen Potential verbunden sein oder voneinander abweichenden elektrischen Potentialen.

Darüber hinaus ist es vorteilhaft, wenn die Abschnitte des Kontaktbereichs durch eine Unterteilung des Kontaktbereichs entlang der Bewegungsrichtung des magnetischen Elementes erzeugt sind. Das magnetische Elemente, welches bevorzugt ein Permanentmagnet ist, wird über die Bewegung des Hebelarms, an welchem auch der Schwimmer befestigt ist, in einer kreisbogenförmigen Bahn bewegt, da der Hebelarm um eine feste Drehachse drehbar gelagert ist. Durch den Verlauf der Trennung entlang dieser kreisbogenförmigen Bahn wird erreicht, dass die Abschnitte ebenfalls entlang der kreisbogenförmigen Bahn verlaufen können und sich somit entlang der kreisbogenförmigen Bahn über das gesamte Widerstandsnetzwerk hinweg erstrecken können. Die Abschnitte können somit sowohl mit den Kontaktflächen an einem ersten Endbereich des Widerstandsnetzwerks in Kontakt gebracht werden als auch an einem zweiten Endbereich des Widerstandsnetzwerks, welcher bevorzugt am gegenüberliegenden Ende des Widerstandsnetzwerks angeordnet ist.

Weiterhin ist es zweckmäßig, wenn das Kontaktelement durch eine Mehrzahl von flächigen bandförmigen Metallstreifen gebildet ist. Dies begünstigt eine besonders einfache Ausbildung des Kontaktelementes. Die einzelnen bandförmigen Metallstreifen sind bevorzugt eben und kreisbogenförmig ausgebildet, so dass sie der Bewegungsbahn des Magneten folgen können.

Außerdem ist es vorteilhaft, wenn der Kontaktbereich und/oder die Abschnitte des Kontaktbereichs die Form eines Kreisbogenabschnitts aufweisen, wobei die Erstreckung in axialer Richtung des Kreisbogenabschnitts wesentlich geringer ist als die Erstreckung in radialer Richtung des Kreisbogenabschnitts und als die Erstreckung in Umfangsrichtung des Kreisbogenabschnitts.

Ein Kreisbogenabschnitt ist besonders vorteilhaft, da der Hebelarm der zur Ermittlung des Füllstandes verwendet wird, um eine Drehachse drehbar gelagert ist. Der Magnet steht entweder in direkter Verbindung mit dem Hebelarm oder wird zumindest von diesem bewegt. Folglich beschreibt die Bahn, entlang welcher der Magnet bei einem Verdrehen des Hebelarms um die Drehachse bewegt wird, ebenfalls einen Kreisbogen. Um sicherzustellen, dass der Magnet stets mit einem annähernd gleichbleibenden Abstand zum Widerstandsnetzwerk und dem Kontaktelement geführt wird, ist daher eine Ausbildung als Kreisbogenabschnitt vorteilhaft.

Die radiale Richtung verläuft vom Mittelpunkt des zugehörigen Kreises des Kreisbogenabschnitts hin zum Außenumfang. Die Umfangsrichtung verläuft entlang des Umfangs des zum Kreisbogenabschnitt gehörenden Kreises und die axiale Richtung verläuft entlang einer Flächennormalen, die auf der durch den zugehörigen Kreis aufgespannte Ebene steht.

Durch eine Ausbildung mit einer sehr geringen Erstreckung in axialer Richtung und einer größeren Erstreckung in radialer Richtung und einer noch wesentlich größeren Erstreckung in Umfangsrichtung ergibt sich ein besonders dünnes Kontaktelement beziehungsweise ein besonders dünner Kontaktbereich. Die Erstreckung in radialer Richtung ist idealerweise so groß, dass der Kontaktbereich die Kontaktflächen des Widerstandsnetzwerks vollständig überdeckt. In einer alternativen Ausgestaltung kann die Erstreckung in radialer Richtung jedoch auch geringer sein als die Erstreckung der Kontaktflächen in radialer Richtung.

Eine bevorzugte Ausführungsform ist durch eine besonders geringe Erstreckung in radialer Richtung und in axialer Richtung gekennzeichnet. Das Kontaktelement beziehungsweise der Kontaktbereich ist hier als drahtförmiges Element ausgebildet. Der Querschnitt kann beispielsweise rund oder eckig ausgestaltet sein.

Bei mehreren Abschnitten des Kontaktbereichs ist es besonders vorteilhaft, wenn jeder einzelne Abschnitt die Form eines Kreisbogenabschnitts aufweist. Vorteilhafterweise weisen das Widerstandsnetzwerk und insbesondere die Kontaktflächen des Widerstandsnetzwerks ebenfalls die Form eines Kreisbogenabschnitts auf.

Weiterhin ist es vorteilhaft, wenn die erste Kontaktfläche an einem ersten Endbereich des Widerstandsnetzwerks ausgebildet ist und die zweite Kontaktfläche an einem zweiten Endbereich des Widerstandsnetzwerks ausgebildet ist, wobei der erste Endbereich und der zweite Endbereich an sich gegenüberliegenden Enden des Widerstandsnetzwerks angeordnet sind.

Dies ist vorteilhaft, um aufeinanderfolgend vom maximalen Füllstand im Tank bis hin zum minimalen Füllstand, beziehungsweise einem leeren Tank, alle Füllstände über das jeweilige Widerstandsnetzwerk abbilden zu können. Beispielsweise entspricht der maximale Füllstand einem besonders hohen spezifischen elektrischen Widerstand, während ein leerer Tank einem besonders niedrigen spezifischen elektrischen Widerstand entspricht. Über eine geeignete Abstufung der spezifischen elektrischen Widerstände der Kontaktflächen kann so eine stufenweise Bestimmung des Füllstandes erfolgen. Je mehr Kontaktflächen vorgesehen sind, umso genauer kann der Füllstand bestimmt werden beziehungsweise umso feiner kann die Rasterung erfolgen.

Auch ist es zu bevorzugen, wenn die Abschnitte des Kontaktbereichs jeweils sowohl mit der ersten Kontaktfläche als auch mit der zweiten Kontaktfläche des Widerstandsnetzwerks in einen elektrisch leitfähigen Kontakt bringbar sind. Dies ist notwendig, um über einen einzelnen Abschnitt des Kontaktbereichs den gesamten Füllstand von maximalem Füllstand, also Tank voll, bis hin zum minimalen Füllstand, also Tank leer, abbilden zu können. Jeder Abschnitt des Kontaktbereichs kann somit eigenständig den jeweiligen Füllstand im Tank wiedergeben. Über mehrere Abschnitte, die parallel zueinander angeordnet sind, kann somit eine Redundanz erzeugt werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Aufsicht auf einen Füllstandsgeber, wobei das Kontaktelement einen Kontaktbereich aufweist, der durch bogenförmig verlaufende Aussparungen in zwei Abschnitte unterteilt ist, und
- Fig. 2: eine Aufsicht auf einen Füllstandsgeber, wobei der Kontaktbereich aus zwei bogenförmigen Elementen gebildet ist, wobei jedes der bogenförmigen Elemente einen Abschnitt des Kontaktbereichs darstellt.

### Bevorzugte Ausführung der Erfindung

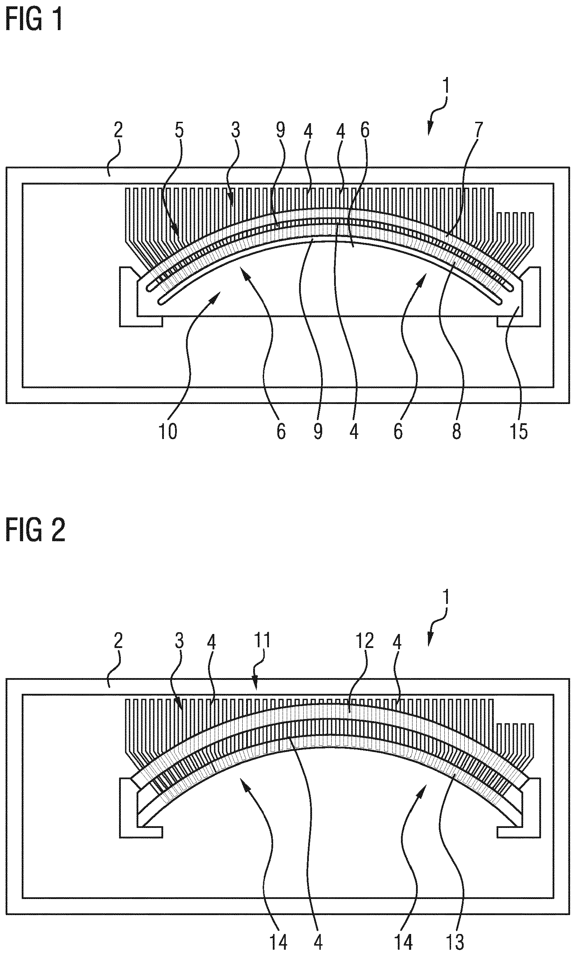

Die Figur 1 zeigt eine Aufsicht auf einen Füllstandsgeber 1. Der Füllstandsgeber 1 weist ein Substrat 2 mit einem darauf angeordneten Widerstandsnetzwerk 3 auf. In Figur 2 ist zu erkennen, dass die einzelnen Kontaktflächen 4 alle eine individuelle Bauform aufweisen, wodurch sie jeweils einen spezifischen und innerhalb des Widerstandsnetzwerks 3 einmaligen elektrischen Widerstand aufweisen. Es ist somit stets eine Zuordnung eines gemessenen elektrischen Widerstands zu einer der Kontaktflächen 4 möglich.

Oberhalb des Widerstandsnetzwerks 3 ist das Kontaktelement 5 angeordnet. Das Kontaktelement 5 ist links und rechts endseitig an Anbindungsbereichen 15 an Distanzelementen angebunden und somit zum Widerstandsnetzwerk 3 beabstandet. Das Kontaktelement 5 weist einen Kontaktbereich 6 auf. Der Kontaktbereich 6 überdeckt dabei das darunter liegende Widerstandsnetzwerk 3 derart, dass durch ein Auslenken des Kontaktbereichs 6 nach unten hin zum Widerstandsnetzwerk 3 ein elektrisch leitfähiger Kontakt mit den Kontaktflächen 4 herstellbar ist. Je nach der Position des Magneten unterhalb des Substrats 2 wird jeweils ein begrenzter Bereich des Kontaktbereichs 6 ausgelenkt.

Der Kontaktbereich 6 weist zwei Abschnitte 7 und 8 auf, die durch bogenförmig verlaufende Ausnehmungen 9 im Kontaktelement 5 voneinander getrennt sind. Die bogenförmigen Ausnehmungen 9 verlaufen entlang der Bewegungsrichtung des Magneten. Die Abschnitte 7 und 8 können unabhängig voneinander in Richtung hin zum Widerstandsnetzwerk 3 ausgelenkt werden. Ob ein Abschnitt 7 oder 8 oder beide Abschnitte 7 und 8 gelichzeitig ausgelenkt werden hängt von der Größe und Positionierung des Magneten ab. Sofern der Magnet entsprechend breit ausgebildet ist und/oder eine entsprechend starke Magnetkraft aufweist, kann er die Abschnitte 7 und 8 einzeln oder gleichzeitig auslenken.

In einer vorteilhaften Ausgestaltung ist der Magnet stiftförmig ausgebildet und wird sowohl unter dem Abschnitt 7 als auch dem Abschnitt 8 geführt, so dass die beiden Abschnitte 7 und 8 jeweils mit den gleichen Kontaktflächen 4 des Widerstandsnetzwerks 3 in Kontakt gebracht werden. Es wird somit von beiden Abschnitten 7 und 8 jeweils ein identisches Signal mit identischem spezifischen elektrischen Widerstand erzeugt. Auf diese Weise ist eine Redundanz erzeugt, die beispielsweise die Beschädigung eines Abschnittes 7 oder 8 durch den jeweils anderen Abschnitt 7 oder 8 kompensieren könnte.

Im Ausführungsbeispiel der Figur 1 sind die beiden Abschnitte 7 und 8 mit dem gleichen elektrischen Potential verbunden. Ebenso ist auch nur ein gemeinsames Widerstandsnetzwerk 3 unterhalb der Abschnitte 7 und 8 angeordnet. In einer vorteilhaften erfindungsgemäßen Weiterbildung können auch voneinander elektrisch getrennte und unabhängige Widerstandsnetzwerke unter den Abschnitten angeordnet sein, wobei jeweils einer der Abschnitte mit einem der Widerstandsnetzwerke in eine elektrisch leitfähige Verbindung gebracht werden kann. Eine solche Anordnung würde eine voneinander unabhängige Messung ermöglichen. Dies kann vorteilhaft verwendet werden, um eine direkte Überprüfung der Richtigkeit der erzeugten Signale durchzuführen. Bei gleichem elektrischem Potential an den Abschnitten und bei gleichen spezifischen Widerstandswerten der Widerstandsnetzwerke und deren Kontaktflächen, sollte bei einer spezifischen Position des Magneten von beiden Systemen das gleiche Signal erzeugt werden. Abweichungen eines Systems könnten so erfasst werden und eine womöglich fehlerhafte Anzeige kann korrigiert werden.

Der in Figur 1 gezeigte Randbereich 10 des Kontaktelementes 5 kann zu Erhöhung der Stabilität des Kontaktelementes 5 vorgesehen sein. Die Darstellung in Figur 1 stellt jedoch lediglich eine beispielhafte vorteilhafte Ausgestaltung des Füllstandsgebers dar.

Die Figur 2 zeigt einen Füllstandsgeber 1, der insbesondere ein abweichend ausgebildetes Kontaktelement 11 aufweist. Das Substrat 2 und das Widerstandsnetzwerk 3 mit seinen Kontaktflächen 4 stimmen mit den Elementen der Figur 1 überein, weswegen auch identische Bezugszeichen verwendet werden.

Das Kontaktelement 11 weist zwei einzelne Streifen 12 und 13 auf, die eine bogenförmige Form aufweisen. Der Radius dem die bogenförmigen Streifen 12, 13 folgen orientiert sich an der Formgebung des Widerstandsnetzwerks 3 und insbesondere an der Anordnung der Kontaktflächen 4. Die Streifen 12, 13 bilden den Kontaktbereich 14 des Kontaktelementes 11 aus.

Die beiden Streifen 12, 13 bilden die Abschnitte des Kontaktbereichs des Kontaktelementes 11. Die beiden Abschnitte 12, 13 sind endseitig in Anbindungsbereichen aufgenommen und beispielsweise durch Distanzelemente von dem Widerstandsnetzwerk 3 beabstandet. Die Abschnitte 12, 13 können mit dem gleichen elektrischen Potential verbunden sein oder mit voneinander abweichenden elektrischen Potentialen. In diesem Fall sind die Abschnitte 12, 13 voneinander elektrisch isoliert angeordnet.

Das Widerstandsnetzwerk 3 kann wie in Figur 1 bereits beschrieben ein einzelnes sein oder durch zwei voneinander unabhängige Widerstandsnetzwerke gebildet sein.

Die Figuren 1 und 2 zeigen beispielhafte Abbildungen eines erfindungsgemäßen Füllstandsgebers. Die Figuren haben keinen beschränkenden Charakter und engen insbesondere hinsichtlich der Materialauswahl, der Geometrie und der Anordnung den Lösungsraum nicht ein. Die einzelnen in den Figuren dargestellten Merkmale und die in den Ansprüchen beschriebenen Merkmale können auch in einer von den Figuren abweichenden Weise miteinander kombiniert werden, ohne sich vom Kerngedanken der Erfindung zu entfernen, welche durch die angefügten Patentansprüche spezifiziert ist.

## Patentansprüche

1. Füllstandsgeber (1) für die Bestimmung eines Füllstandes in einem Tank, mit einem Widerstandsnetzwerk (3), mit einem Kontaktelement (5, 11) und mit einem magnetischen Element, wobei das Kontaktelement (5, 11) beabstandet zu dem Widerstandsnetzwerk (3) angeordnet ist und das magnetische Element relativ zum Widerstandsnetzwerk (3) und dem Kontaktelement (5, 11) bewegbar ist, wobei das Kontaktelement (5, 11) einen Kontaktbereich (6, 14) aufweist, welcher durch das magnetische Element auslenkbar ist, wobei eine elektrisch leitfähige Verbindung zwischen dem Kontaktbereich (6, 14) und dem Widerstandsnetzwerk (3) durch eine Auslenkung des Kontaktbereichs (6, 14) herstellbar ist, **dadurch gekennzeichnet, dass** der Kontaktbereich (6, 14) durch ein flächiges bandförmiges Element gebildet ist, welches durch die Magnetkraft des magnetischen Elementes partiell auslenkbar ist, wobei der Kontaktbereich (6, 14) zumindest zwei benachbart zueinander angeordnete und zueinander beabstandete streifenförmige Abschnitte (7, 8, 12, 13) aufweist, dass das Widerstandsnetzwerk (3) eine Mehrzahl von Kontaktflächen (4) aufweist die benachbart zueinander angeordnet sind, wobei die Erzeugung eines elektrisch leitfähigen Kontakts zwischen dem Kontaktbereich (6, 14) und einer ersten Kontaktfläche (4) ein Signal erzeugt, welches einen maximalen Füllstand im Tank wiederspiegelt, und die Erzeugung eines elektrisch leitfähigen Kontakts zwischen dem Kontaktbereich (6, 14) und einer zweiten Kontaktfläche (4) ein Signal erzeugt, welches einen minimalen Füllstand im Tank wiederspiegelt.

2. Füllstandsgeber (1) nach Anspruch 1, **dadurch gekennzeichnet, dass** die Abschnitte (7, 8, 12, 13) des Kontaktbereichs (6, 14) elektrisch leitfähig miteinander verbunden sind.

3. Füllstandsgeber (1) nach einem der vorhergehenden Ansprüche, **dadurch gekennzeichnet, dass** die Abschnitte (7, 8, 12, 13) des Kontaktbereichs (6, 14) mit dem gleichen elektrischen Potential in elektrisch leitender Verbindung stehen.

4. Füllstandsgeber (1) nach einem der vorhergehenden Ansprüche, **dadurch gekennzeichnet, dass** die Abschnitte (7, 8, 12, 13) des Kontaktbereichs (6, 14) frei von Ausnehmungen und/oder Durchdringungen sind.

5. Füllstandsgeber (1) nach einem der vorhergehenden Ansprüche, **dadurch gekennzeichnet, dass** die zueinander beabstandeten Abschnitte (7, 8, 12, 13) des Kontaktbereichs (6, 14) durch einen gemeinsamen Magneten auslenkbar sind.

6. Füllstandsgeber (1) nach einem der vorhergehenden Ansprüche, **dadurch gekennzeichnet, dass** ein elektrisch leitfähiger Kontakt zwischen den Abschnitten (7, 8, 12, 13) des Kontaktbereichs (6, 14) und Kontaktflächen (4) eines Widerstandsnetzwerks (3) herstellbar ist.

7. Füllstandsgeber (1) nach einem der vorhergehenden Ansprüche, **dadurch gekennzeichnet, dass** jedem der Abschnitte (7, 8, 12, 13) des Kontaktbereichs (6, 14) ein eigenes Widerstandsnetzwerk (3) zugeordnet ist, wobei ein elektrisch leitfähiger Kontakt zwischen einem Abschnitt (7, 8, 12, 13) und dem zugeordneten Widerstandsnetzwerk (3) durch eine Auslenkung des jeweiligen Abschnitts (7, 8, 12, 13) herstellbar ist.

8. Füllstandsgeber (1) nach einem der vorhergehenden Ansprüche, **dadurch gekennzeichnet, dass** die Abschnitte (7, 8, 12, 13) des Kontaktbereichs (6, 14) durch eine Unterteilung des Kontaktbereichs (6, 14) entlang der Bewegungsrichtung des magnetischen Elementes erzeugt sind.

9. Füllstandsgeber (1) nach einem der vorhergehenden Ansprüche, **dadurch gekennzeichnet, dass** das Kontaktelement (5, 11) durch eine Mehrzahl von flächigen bandförmigen Metallstreifen (12, 13) gebildet ist.

10. Füllstandsgeber (1) nach einem der vorhergehenden Ansprüche, **dadurch gekennzeichnet, dass** der Kontaktbereich (6, 14) und/oder die Abschnitte (7, 8, 12, 13) des Kontaktbereichs (6, 14) die Form eines Kreisbogenabschnitts aufweisen, wobei die Erstreckung in axialer Richtung des Kreisbogenabschnitts wesentlich geringer ist als die Erstreckung in radialer Richtung des Kreisbogenabschnitts und als die Erstreckung in Umfangsrichtung des Kreisbogenabschnitts.

11. Füllstandsgeber (1) nach einem der vorhergehenden Ansprüche, **dadurch gekennzeichnet, dass** die erste Kontaktfläche (4) an einem ersten Endbereich des Widerstandsnetzwerks (3) ausgebildet ist und die zweite Kontaktfläche (4) an einem zweiten Endbereich des Widerstandsnetzwerks (3) ausgebildet ist, wobei der erste Endbereich und der zweite Endbereich an sich gegenüberliegenden Enden des Widerstandsnetzwerks (3) angeordnet sind.

12. Füllstandsgeber (1) nach einem der vorhergehenden Ansprüche, **dadurch gekennzeichnet, dass** die Abschnitte (7, 8, 12, 13) des Kontaktbereichs (6, 14) jeweils sowohl mit der ersten Kontaktfläche (4) als auch mit der zweiten Kontaktfläche (4) des Widerstandsnetzwerks (3) in einen elektrisch leitfähigen Kontakt bringbar sind.

## Claims

1. Filling level indicator (1) for determining a filling level in a tank, having a resistor network (3), having a contact element (5, 11), and having a magnetic element, wherein the contact element (5, 11) is disposed so as to be spaced apart from the resistor network (3) and the magnetic element is movable relative to the resistor network (3) and the contact element (5, 11), wherein the contact element (5, 11) has a contact region (6, 14) which is deflectable by the magnetic element, wherein an electrically conductive connection between the contact region (6, 14) and the resistor network (3) is capable of being produced by means of a deflection of the contact region (6, 14), **characterized in that** the contact region (6, 14) is formed by a planar tape-shaped element which is partially deflectable by the magnetic force of the magnetic element, wherein the contact region (6, 14) has at least two strip-shaped portions (7, 8, 12, 13) that are disposed so as to be mutually adjacent and mutually spaced apart, **in that** the resistor network (3) has a plurality of contact faces (4) which are disposed so as to be mutually adjacent, wherein the generation of an electrically conductive contact between the contact region (6, 14) and a first contact face (4) generates a signal which reflects a maximum filling level in the tank, and the generation of an electrically conductive contact between the contact region (6, 14) and a second contact face (4) generates a signal which reflects a minimum filling level in the tank.

2. Filling level indicator (1) according to Claim 1, **characterized in that** the portions (7, 8, 12, 13) of the contact region (6, 14) are connected to one another in an electrically conductive manner.

3. Filling level indicator (1) according to one of the preceding claims, **characterized in that** the portions (7, 8, 12, 13) of the contact region (6, 14) are connected in an electrically conducting manner to the same electric potential.

4. Filling level indicator (1) according to one of the preceding claims, **characterized in that** the portions (7, 8, 12, 13) of the contact region (6, 14) are free of clearances and/or penetrations.

5. Filling level indicator (1) according to one of the preceding claims, **characterized in that** the mutually spaced apart portions (7, 8, 12, 13) of the contact region (6, 14) are deflectable by way of a common magnet.

6. Filling level indicator (1) according to one of the preceding claims, **characterized in that** an electrically conductive contact is capable of being established between the portions (7, 8, 12, 13) of the contact region (6, 14) and contact faces (4) of a resistor network (3).

7. Filling level indicator (1) according to one of the preceding claims, **characterized in that** each of the portions (7, 8, 12, 13) of the contact region (6, 14) is assigned a dedicated resistor network (3), wherein an electrically conductive contact between a portion (7, 8, 12, 13) and the assigned resistor network (3) is capable of being established by a deflection of the respective portion (7, 8, 12, 13).

8. Filling level indicator (1) according to one of the preceding claims, **characterized in that** the portions (7, 8, 12, 13) of the contact region (6, 14) are generated by subdividing the contact region (6, 14) along the direction of movement of the magnetic element.

9. Filling level indicator (1) according to one of the preceding claims, **characterized in that** the contact element (5, 11) is formed by a plurality of planar tape-shaped metal strips (12, 13) .

10. Filling level indicator (1) according to one of the preceding claims, **characterized in that** the contact region (6, 14) and/or the portions (7, 8, 12, 13) of the contact region (6, 14) have the shape of an arcuate segment, wherein the extent of the arcuate segment in the axial direction is substantially smaller than the extent of the arcuate segment in the radial direction and than the extent of the arcuate segment in the circumferential direction.

11. Filling level indicator (1) according to one of the preceding claims, **characterized in that** the first contact face (4) is configured on a first end region of the resistor network (3), and the second contact face (4) is configured on a second end region of the resistor network (3), wherein the first end region and the second end region are disposed on mutually opposite ends of the resistor network (3).

12. Filling level indicator (1) according to one of the preceding claims, **characterized in that** the portions (7, 8, 12, 13) of the contact region (6, 14) are in each case capable of being brought into an electrically conductive contact with both the first contact face (4) as well as with the second contact face (4) of the resistor network (3).

## Revendications

1. Indicateur de niveau (1) permettant de déterminer un niveau de remplissage d'un réservoir, comprenant un réseau de résistances (3), un élément de contact (5, 11) et un élément magnétique, l'élément de contact (5, 11) étant espacé du réseau de résistances (3) et l'élément magnétique étant mobile par rapport au réseau de résistances (3) et à l'élément de contact (5, 11), l'élément de contact (5, 11) présentant une zone de contact (6, 14) qui peut être déviée par l'élément magnétique, une liaison électriquement conductrice pouvant être établie entre la zone de contact (6, 14) et le réseau de résistances (3) par l'intermédiaire d'une déviation de la zone de contact (6, 14), **caractérisé en ce que** la zone de contact (6, 14) est formée par un élément plat en forme de bande qui peut être partiellement dévié par la force magnétique de l'élément magnétique, la zone de contact (6, 14) présentant au moins deux parties (7, 8, 12, 13) en forme de bandes disposées l'une à côté de l'autre et espacées l'une de l'autre, **en ce que** le réseau de résistances (3) présente une pluralité de surfaces de contact (4) qui sont disposées les unes à côté des autres, la production d'un contact électriquement conducteur entre la zone de contact (6, 14) et une première surface de contact (4) produisant un signal qui est représentatif d'un niveau de remplissage maximum du réservoir, et la production d'un contact électriquement conducteur entre la zone de contact (6, 14) et une seconde surface de contact (4) produisant un signal qui est représentatif d'un niveau de remplissage minimum du réservoir.

2. Indicateur de niveau (1) selon la revendication 1, **caractérisé en ce que** les parties (7, 8, 12, 13) de la zone de contact (6, 14) sont reliées les unes aux autres de manière électriquement conductrice.

3. Indicateur de niveau (1) selon l'une des revendications précédentes, **caractérisé en ce que** les parties (7, 8, 12, 13) de la zone de contact (6, 14) sont en liaison électriquement conductrice avec le même potentiel électrique.

4. Indicateur de niveau (1) selon l'une des revendications précédentes, **caractérisé en ce que** les parties (7, 8, 12, 13) de la zone de contact (6, 14) sont exemptes d'évidements et/ou de traversées.

5. Indicateur de niveau (1) selon l'une des revendications précédentes, **caractérisé en ce que** les parties (7, 8, 12, 13) espacées les unes des autres de la zone de contact (6, 14) peuvent être déviées par l'aimant commun.

6. Indicateur de niveau (1) selon l'une des revendications précédentes, **caractérisé en ce qu'**un contact électriquement conducteur peut être établi entre les parties (7, 8, 12, 13) de la zone de contact (6, 14) et les surfaces de contact (4) d'un réseau de résistances (3).

7. Indicateur de niveau (1) selon l'une des revendications précédentes, **caractérisé en ce qu'**un réseau de résistances (3) propre est associé à chacune des parties (7, 8, 12, 13) de la zone de contact (6, 14), un contact électriquement conducteur pouvant être établi entre une partie (7, 8, 12, 13) et le réseau de résistances associé (3) par l'intermédiaire d'une déviation de la partie (7, 8, 12, 13) respective.

8. Indicateur de niveau (1) selon l'une des revendications précédentes, **caractérisé en ce que** les parties (7, 8, 12, 13) de la zone de contact (6, 14) sont produites par une division de la zone de contact (6, 14) le long de la direction de mouvement de l'élément magnétique.

9. Indicateur de niveau (1) selon l'une des revendications précédentes, **caractérisé en ce que** l'élément de contact (5, 11) est formé par une pluralité de bandes métalliques plates en forme de bandes (12, 13).

10. Indicateur de niveau (1) selon l'une des revendications précédentes, **caractérisé en ce que** la zone de contact (6, 14) et/ou les parties (7, 8, 12, 13) de la zone de contact (6, 14) présentent la forme d'une partie en arc de cercle, l'extension dans la direction axiale de la partie en arc de cercle étant sensiblement inférieure à l'extension dans la direction radiale de la partie en arc de cercle et à l'extension dans la direction circonférentielle de la partie en arc de cercle.

11. Indicateur de niveau (1) selon l'une des revendications précédentes, **caractérisé en ce que** la première surface de contact (4) est formée sur une première zone d'extrémité du réseau de résistances (3) et la seconde surface de contact (4) est formée sur une seconde zone d'extrémité du réseau de résistances (3), la première zone d'extrémité et la seconde zone d'extrémité étant disposées à des extrémités opposées du réseau de résistances (3).

12. Indicateur de niveau (1) selon l'une des revendications précédentes, **caractérisé en ce que** les parties (7, 8, 12, 13) de la zone de contact (6, 14) peuvent respectivement être mises en contact électriquement conducteur avec la première zone de contact (4) et la seconde zone de contact (4) du réseau de résistances (3).
